Europäisches Patentamt

European Patent Office

Office européen des brevets

(11) Publication number: **0 395 595**
**A1**

## EUROPEAN PATENT APPLICATION

(21) Application number: **90830158.3**

(22) Date of filing: **10.04.90**

(51) Int. Cl.⁵: **A47J 37/04**

(30) Priority: **21.04.89 IT 2093589 U**

(43) Date of publication of application:
**31.10.90 Bulletin 90/44**

(84) Designated Contracting States:
**DE ES FR GB**

(71) Applicant: **SMEG S.p.A.**
**Via Circonvallazione Nord, 36**
**Guastalla (Reggio Emilia)(IT)**

(72) Inventor: **Bertazzoni, Roberto**
**Via Maldotti 2**
**I-Guastalla (Reggio Emilia)(IT)**

(74) Representative: **Adorno, Silvano et al**
**c/o SOCIETA' ITALIANA BREVETTI S.p.A. Via**
**Carducci, 8**
**I-20123 Milano(IT)**

(54) **Geared motor unit for revolving spit mounted on a cooking oven, provided with a centrifugal fan for cooling motor and oven walls.**

(57) A geared motor unit for cooking oven spit comprises an outlet shaft (2a) at reduced speed for fitting the spit and, on the opposite side of the sheltering box (1), a drive shaft (3a) on which the rotating wheel (3) of a centrifugal fan is mounted. The fan scroll (4) is fixed to the box (1) with axial air intake (6) and radial throw (5) to blow cooling air to the desired direction, in particular onto the oven walls and the motor itself. The fasteners of the scroll (4) are preferably so arranged to allow for an easy change of the orientation of throw (5). Furthermore there can be provided a front coupling for connecting the shaft (2a) with a spit bearing hub (2) usually disengaged by spring means, so that the hub can rotate only when the spit is connected.

Fig.1

## GEARED MOTOR UNIT FOR REVOLVING SPIT MOUNTED ON A COOKING OVEN, PROVIDED WITH A CENTRIFUGAL FAN FOR COOLING MOTOR AND OVEN WALLS

The present invention relates to a geared motor unit for revolving a cooking oven spit provided with centrifugal fan for further cooling the driving motor and the oven walls themselves.

It is known that when the spit is operated, with which many modern cooking ovens are provided, the heat emitted by the electric resistors- is transferred to the oven walls, whereby the contact therewith may result to be dangerous with consequent burning of those which incidentally come in contact with them. Actually it is normal that the attention decreases in this respect especially when is known that it is not the oven to be actuated, and in fact the oven access door is partially open, as it frequently occurs when the spit is working. Furthermore the increase of the temperature in the surrounding space may lead to an overheating of the geared motor itself causing the spit to revolve, with the consequence of a possible impairing of its operation.

It is true that ovens are manufactured which are provided with an inner fan having a separate control member, such as a pushbutton, the operation of which could be omitted by oversight. Furthermore this fan is frequently mounted in the oven at such a position not to have any direct influence onto the spit motor. Another inconvenience is given by the fact that an additional power consumption is required besides the normal consumption of the motor.

It is an object of the present invention to provide a geared motor unit for cooking oven spit, which is provided with a fan on its own axis and does not have the drawbacks of the prior art while ensuring a good cooling of the oven walls and the motor itself without additional consumption of electric power, but with the certainty that the fan is automatically operated as soon as the motor starts rotation at the same time as whichever resistor is heated.

This is obtained by means of a geared motor or cooking oven spit on the drive axis of which, at the opposite side with respect to the outlet side with reduced speed for fitting the spit, there is mounted the rotating wheel of a centrifugal fan whose scroll is fixed to the reduction unit box, there being provided a fastening means adapted to allow the fan orientation along a direction being chosen among four directions at right angles to each other.

According to a particular embodiment of the present invention, upon starting the geared motor unit and being switched on the heating resistors, while the fan is immediately operated, the hob for inserting the spit is kept stationary, the rotation beginning only when the spit rod is fitted therein. A front coupling is in fact provided between a spit holding hub and the shaft at the outlet of the reduction gear unit, such a coupling being normally kept disengaged through a spring biasing the two elements far from each other.

Additional features of the geared motor unit with fan according to the present invention will result more clearly from the following description of a preferred embodiment thereof with reference to the annexed drawings in which:

FIGURE 1 is a side view of a geared motor unit with fan according to the present invention; and

FIGURE 2 is a view of the same geared motor unit taken in the direction of arrow A of Fig. 1, partially in cross-section and indicating, by dotted lines, the other possible positions of the fan scroll.

With reference to the drawings numeral 1 indicates the housing or box of the geared motor unit enclosing the electric motor and the reduction gearing (not shown in detail) of which the two outlet shafts may be seen, respectively 2a at reduced speed for engagement of the spit and 3a, on the opposite side, at the same non-reduced speed of the electric motor. On the shaft 3a there is mounted the rotating wheel 3 of a centrifugal fan the scroll 4 of which has an axial air intake 6 and a radial throw 5, for blowing cooling air to the desired direction (represented upward in the drawing).

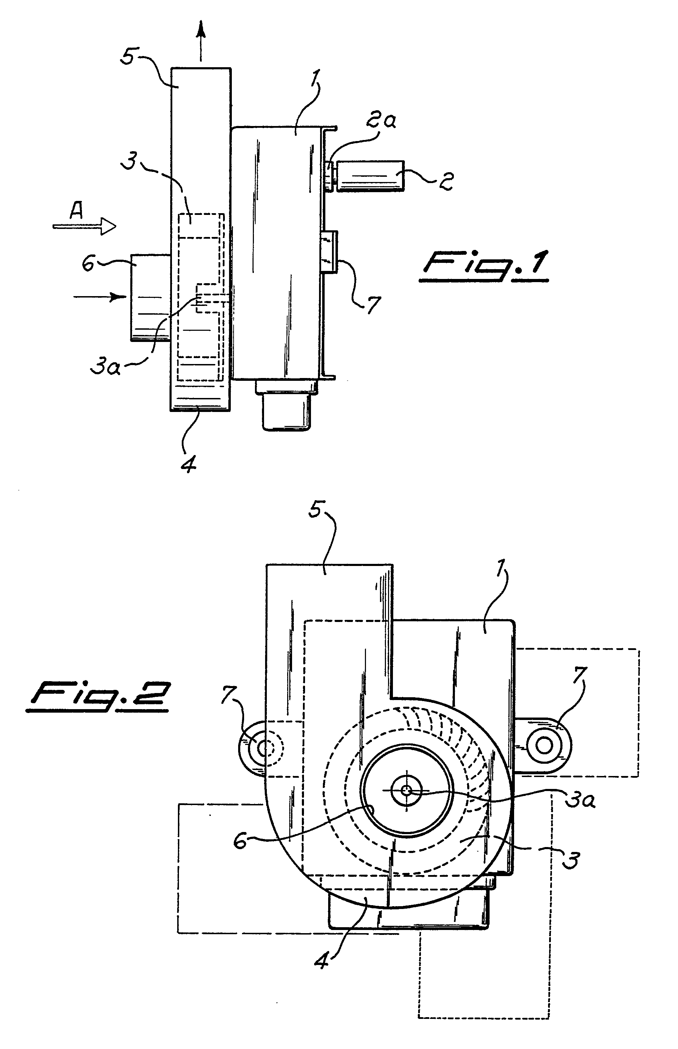

It will be realized that preferably the fan scroll 4 is mounted to the box 1 with fastening means such as screws etc. in through holes so as to allow a prefixed orientation of the throw 5, chosen among four positions at right angles to each other as shown by dotted lines in Fig. 2.

According to another feature of the present invention a spit holding hub 2 for fitting the spit rod at its outer free end is mounted on the shaft 2a so that such a hub is normally stationary as it is not driven into rotation by a shaft 2a when the spit is disengaged. Suitable springs (not shown) keep usually the hub 2 disengaged form shaft 2a and only the thrust exerted toward the inside by the spit rod when also fitted at the opposite side in a counter-hub of known type, can overcome such a spring force thus allowing the engagement of the front coupling and consequently fastening the hub 2 to the shaft 2a to allow the spit rotation.

It will be realized that the whole unit can be mounted within an oven by means of only two screws throughout respective extensions 7 formed on the box 1.

It is clear that by properly studying the reflection of air stream from the throw 5 to the oven walls, the same box 1 may be impinged by at least a fraction of this stream, thus giving rise to a sensible cooling of what is housed therein, in particular the electric motor. Thereby when assembling the oven it will be possible to decide which is the best orientation for the throw 5 of the centrifugal fan.

From the foregoing it is also clear that according to the present invention, while providing only one control for switching on whichever resistor and for starting the motor, there is however the certainty that the fan is operated at the same time, even before insertion of the spit rod, this operation being made easier by the fact that the hub 2, upon engagement, is still stationary.

Finally it will be noted that the scope of protection of the present invention is not restricted to the above described and illustrated embodiment, but extends itself to all the possible variations which are equivalent from a mechanical point of view and afford the same utility.

## Claims

1. A geared motor unit for cooking oven spit, comprising an outlet shaft (2a) at reduced speed for fitting the spit and a sheltering box (1), characterized by the fact of having, on the opposite side of the shaft (2a) a drive motor (3a) on which the rotating wheel (3) of a centrifugal fan is mounted, whose scroll (4) is fixed to said box (1) with axial air intake (6) and radial throw (5).

2. A geared motor unit according to claim 1, characterized in that said scroll (4) is mounted to said box (1) by fastening means adapted to allow that the fan throw (5) is oriented to a prefixed direction among four different directions at right angles to each other.

3. A geared motor unit according to claim 1 or 2, characterized in that said shaft (2a) is connectable with a spit bearing hub (2) by means of a front coupling normally disengaged by spring means biasing said hub (2) far from the shaft (2a).

5

A

6

3

3a

4

1

2a

2

7

_Fig.1_

_Fig.2_

5

7

7

1

3a

6

3

4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-2898437 (MC FARLAND DONALD L.) <br> * column 5, lines 1 - 58; figure 7 * | 1 | A47J37/04 |
| A | | 3 | |
| X | FR-A-2530447 (THOMSON-BRANDT) <br> * page 2, line 14 - page 4, line 7 * | 1 | |
| A | | 3 | |
| X | DE-A-2026908 (KUTSCHHEIT MANFRED) <br> * the whole document * | 1 | |
| A | | 3 | |
| A | DE-A-2741023 (REINHOLD MACK GMBH & CO WERKZEUGBAU-METALLWAREN) <br> * page 5, last paragraph - page 6, last paragraph; figures 4, 5 * | 1-3 | |

TECHNICAL FIELDS SEARCHED (Int. Cl.5 )

A47J

The present search report has been drawn up for all claims

| Place of search | Date of completion of the search | Examiner |
|---|---|---|
| THE HAGUE | 30 AUGUST 1990 | FUOCHI R. |